# FASCICULE DE BREVET EUROPEEN

(11) **EP 3 083 715 B1**
(45) Date de publication et mention de la délivrance du brevet: **18.04.2018**
(21) Numéro de dépôt: 14814956.0
(22) Date de dépôt: 26.11.2014
(51) Int. Cl.: C08F 20/06, C08F 22/02

(54) **PROCEDE DE POLYMERISATION DE L'ACIDE (METH)ACRYLIQUE EN SOLUTION**
VERFAHREN ZUR LÖSUNGSPOLYMERISIERUNG VON (METH)ACRYLSÄURE
METHOD FOR SOLUTION-POLYMERISING (METH)ACRYLIC ACID

(30) Priorité: 20.12.2013 FR 1363258
(43) Date de publication de la demande: 26.10.2016
(73) Titulaire: COATEX, 69730 Genay (FR)
(72) Inventeur: SUAU, Jean-Marc, F-69480 Lucenay (FR)
(74) Mandataire: Balmefrezol, Ludovic Francis Pierre
(86) Numéro de dépôt international: PCT/FR2014/053038
(87) Numéro de publication internationale: WO 2015/092186

(56) Documents cités:
- WO-A1-2005/095466
- US-A- 2 789 099
- US-A- 4 339 473

## Description

### Domaine de l'invention

La présente invention concerne le domaine technique de la polymérisation radicalaire de l'acide (méth)acrylique. Plus précisément, la présente invention concerne un nouveau procédé de polymérisation radicalaire, les polymères ainsi obtenus et leurs applications dans l'industrie.

### Arrière-plan de l'invention

Il existe différents procédés de polymérisation radicalaire.
On peut d'abord citer les méthodes qui mettent en oeuvre des solvants organiques tels que des alcools secondaires comme l'isopropanol. Ces méthodes ne sont aujourd'hui pas satisfaisantes car elles génèrent des composés organiques volatils (COV ou en anglais VOC).
D'une part, il est nécessaire d'éliminer ces solvants en fin de réaction, ce qui a pour effet de complexifier le procédé industriel de préparation du polymère.
D'autre part, les effets sur la santé et sur l'environnement de ces solvants sont reconnus comme très néfastes, de sorte qu'on recherche à éviter d'en produire. Enfin, même après purification (distillation), il reste toujours des traces de solvant dans la solution de polymères.

Il existe d'autres méthodes de synthèse de polymères polyacryliques qui ont lieu dans l'eau et ne génèrent pas de composés organiques volatils.
Parmi les différents procédés de polymérisation radicalaire, on peut également citer la polymérisation radicalaire contrôlée de type RAFT (Reversible Addition Fragmentation chain Transfer) qui permet de réaliser la polymérisation vivante d'un monomère. Un tel procédé permet en outre d'obtenir des polymères présentant de faibles indices de polydispersibilité IP (également appelé indice de polymolécularité), ce qui les rend particulièrement efficaces pour certaines applications.

Pour mettre en oeuvre une polymérisation radicalaire contrôlée de type RAFT, et ainsi obtenir un polymère de masse moléculaire attendue présentant un bon indice IP, il est important d'introduire dans le milieu réactionnel une quantité disponible d'agent de transfert de chaîne, autrement dit d'engager une quantité d'agent de transfert de chaîne telle que chaque chaîne à polymériser soit fonctionnalisée par un agent de transfert de chaîne. En outre, il est important que cet agent de transfert de chaîne soit d'ores et déjà disponible lorsque la polymérisation est initiée, c'est-à-dire lorsque l'on chauffe le réacteur de polymérisation et que l'on génère des radicaux. Ceci implique que des quantités importantes d'agent de transfert de chaîne doivent être mises en oeuvre dans un procédé de polymérisation radicalaire contrôlée de type RAFT.

Malgré tous les avantages résultant d'une polymérisation RAFT, l'utilisation de telles quantités d'agent de transfert de chaîne présentent un certain nombre d'inconvénients.
Tout d'abord, il s'avère que les agents de transfert de chaîne sont des produits coûteux, ce qui a une incidence non négligeable sur le coût du polymère obtenu.
De plus, lorsqu'on utilise des agents de transfert de chaîne soufrés tel que décrits dans les documents WO 02/070571, WO 2005/095466 et WO 2006/024706, on constate qu'une fraction de ces composés va être dégradée en sous-produits soufrés libres du type CS₂ et H₂S, et se retrouver dans la solution aqueuse de polymère final et dans les eaux d'écoulement du procédé, pouvant ainsi avoir un impact négatif sur l'être humain et sur l'environnement. En outre, la présence de ces sous-produits soufrés dans la solution aqueuse génère lors de l'utilisation du polymère des dégagements gazeux nocifs pour l'être humain.

Il existe des méthodes alternatives à la polymérisation radicalaire contrôlée de type RAFT. Selon l'une d'entre elles, on utilise de l'eau oxygénée qui joue le rôle d'initiateur, ainsi que, par exemple, du sulfate de cuivre qui joue le rôle de catalyseur et d'agent de transfert de chaîne. Néanmoins, pour aboutir à un polymère qui présente une masse moléculaire inférieure à 8 000 g/mol, par exemple de l'ordre de 6 000 g/mol, il est nécessaire d'engager des quantités importantes de catalyseur, ce qui génère des quantités importantes de sous-produits polluants.

Alternativement, on utilise l'acide thiolactique, ou un autre mercaptan RSH, en tant qu'agent de transfert de chaîne supplémentaire, mais, à nouveau, pour obtenir un polymère qui présente une masse moléculaire inférieure à 8 000 g/mol, par exemple de l'ordre de 6 000 g/mol, il faut engager des quantités importantes d'acide thiolactique ou, de manière plus générale, d'agent de transfert.

D'autres procédés encore ont recours à l'hypophosphite de sodium, de formule chimique NaPO₂H₂, en tant qu'agent de transfert de chaîne et d'oxydo-réduction, en présence d'eau oxygénée ou de générateur de radicaux. Le document GB 771 573 A1 notamment décrit un tel procédé. Cela présente l'inconvénient majeur de nécessiter des quantités importantes d'hypophosphite de sodium, une fraction du phosphore se retrouvant greffée dans le polymère, une autre fraction du phosphore se retrouvant sous forme de sels de phosphore dans les eaux de procédé. Ceci constitue, d'une part, un inconvénient lors de l'utilisation du polymère et, d'autre part, un polluant pour l'environnement.

### Brève description de l'invention

Un objet de la présente invention est de proposer un procédé de préparation d'un polymère de l'acide (méth)acrylique présentant une masse moléculaire inférieure à 8 000 g/mol, par exemple inférieure à 7 000 g/mol, ce procédé permettant d'obtenir une solution aqueuse de polymères qui contienne moins de sous-produits du type sulfure de carbone CS₂ ou sulfure d'hydrogène H₂S, de manière à réduire les risques sur l'être humain et sur l'environnement lors de la synthèse du polymère, mais également lors de l'utilisation de la solution polymérique.

Un autre objet encore de la présente invention est de réduire la quantité de polluants dans les eaux du procédé, liés à l'utilisation de réactifs comportant du soufre et du phosphore.

Un autre objet de la présente invention est de proposer un procédé de préparation d'un polymère polyacrylique sans solvant, c'est-à-dire qui ne génère pas de composés organiques volatils.

Un autre objet encore de la présente invention est de proposer un procédé de fabrication d'un polymère présentant un bon indice IP tout en maîtrisant les coûts associés au procédé.

Un autre objet de la présente invention est de proposer un procédé de fabrication d'une solution aqueuse de polymères qui contienne peu de monomères non polymérisés.

L'inventeur a mis au point un nouveau procédé de préparation, sans solvant autre que l'eau, d'un polymère de l'acide (méth)acrylique en solution, ledit polymère présentant une masse moléculaire inférieure à 8 000 g/mol. Ce procédé repose notamment sur la préparation d'un monomère acrylate de cuivre, de méthacrylate de cuivre ou de maléate de cuivre en utilisant, par exemple du carbonate de cuivre, ou un de ses dérivés, puis en utilisant ce monomère spécial pendant la polymérisation des monomères d'acide (méth)acrylique. Selon ce procédé, l'utilisation d'un agent de transfert de chaîne soufré tel que décrit dans les documents WO 02/070571, WO 2005/095466 et WO 2006/024706, n'est plus nécessaire. Le procédé objet de la présente invention est par conséquent nouveau par rapport à la demande de brevet française publiée sous le numéro FR 2 995 899, ainsi que par rapport à la demande de brevet française déposée le 26 novembre 2013, sous le numéro 13 61631, et non encore publiée.

### Procédé de polymérisation:

Ainsi, un premier objet de la présente invention concerne un procédé de préparation d'un polymère de l'acide (méth)acrylique en solution aqueuse, ledit polymère présentant une masse moléculaire inférieure à 8 000 g/mol, comprenant les étapes suivantes :
a) on prépare un (méth)acrylate de cuivre et/ou un maléate de cuivre dans un réacteur de synthèse,
b) on introduit dans le réacteur un sel de fer, par exemple du sulfate de fer, ou un de ses dérivés hydratés,
c) on chauffe le réacteur à une température d'au moins 60°C,
d) on introduit dans le réacteur, de manière continue et simultanée, les composés suivants :
   d1) le ou les monomère(s) (méth)acrylique(s) à polymériser,
   d2) un système initiateur de polymérisation, par exemple du peroxyde d'hydrogène.

Le procédé de préparation du polymère a lieu en solution aqueuse. Ainsi, le procédé de la présente invention comprend outre les étapes ci-dessus mentionnées une étape d'introduction d'eau dans le réacteur de synthèse.
Cette introduction d'eau est généralement la première étape mise en oeuvre dans le procédé objet de la présente invention.

L'étape a) du procédé selon l'invention consiste à préparer une certaine quantité d'un « monomère spécial », à savoir l'acrylate de cuivre, le méthacrylate de cuivre et/ou le maléate de cuivre. Il peut s'agir d'un mélange de monomères spéciaux, par exemple sous forme acrylate ou diacrylate, méthacrylate ou diméthacrylate, maléate ou dimaléate, compte tenu de l'ionicité du cuivre en solution aqueuse. Pour préparer ce monomère spécial, on introduit dans le réacteur de synthèse des monomères d'acide acrylique, d'acide méthacrylique et/ou d'acide maléique, ainsi qu'un composé comportant des atomes de cuivre, par exemple du carbonate de cuivre ou un de ses dérivés. Par « carbonate de cuivre ou dérivé » ou « composé de type carbonate de cuivre », on entend le composé CuCO₃ ou tout autre dérivé par exemple le CuCO₃.Cu(OH)₂. On cite également par exemple la malachite (Cu₂(OH)₂CO₃) et l'azurite/chessilite (Cu₃(OH)₂(CO₃)₂). En d'autres termes, un composé de type carbonate de cuivre est un composé qui comporte au moins un atome de cuivre et qui se solubilise et se dégrade une fois dans l'eau et sous conditions acides. Ainsi, un tel composé ne peut pas être considéré comme un catalyseur qui, par définition, revient à sa forme initiale après réaction. Le monomère acide (acide acrylique, acide méthacrylique et/ou acide maléique) doit se trouver en excès par rapport au composé comportant des atomes de cuivre, de manière à ce que l'ensemble des ions Cu²⁺ de ce composé se trouve sous forme solvatée.

Tous les aspects de la présente invention décrits ci-après peuvent être considérés seuls ou en combinaison.

Selon l'étape b) du procédé, qui peut être simultanée avec l'étape a), on ajoute dans le réacteur de synthèse un sel de fer.

Par « sel de fer », on entend par exemple le composé FeSO₄ ou tout autre dérivé hydraté, par exemple FeSO₄.7H₂O.

Le procédé de l'invention repose, en effet, sur l'utilisation conjointe de « monomères spéciaux au cuivre » (l'acrylate de cuivre, le méthacrylate de cuivre et/ou le maléate de cuivre) et de sel de fer (par exemple le FeSO₄ ou un de ses dérivés hydratés). L'inventeur s'est rendu compte, et démontre ci-après, que l'utilisation simultanée de ces deux composés permet de préparer des polymères de l'acide (méth)acrylique, sans avoir recours à un agent de transfert de chaîne soufré, tel que ceux décrits dans les documents WO 02/070571, WO 2005/095466 et WO 2006/024706.
Ainsi, le procédé de l'invention permet de réduire la contamination du polymère obtenu, ainsi que la production de sous-produits polluants type CS₂ ou H₂S, du fait qu'aucun de ces agents soufrés n'est employé.
Il permet par ailleurs de réduire considérablement le coût de préparation du polymère poly(méth)acrylique.
Le procédé de la présente invention permet de résoudre l'un des problèmes techniques majeurs de la présente invention, à savoir proposer un procédé de préparation d'un polymère d'acide (méth)acrylique de masse moléculaire inférieure à 8 000 g/mol, par exemple inférieure à 6 000 g/mol.

Il est à noter, en outre, que le procédé de l'invention est un procédé qui ne met pas en oeuvre de solvant tels que des alcools secondaires comme l'isopropanol ou tout autre solvant susceptible de générer des composés organiques volatils (COV). Le procédé de la présente invention est en effet réalisé sans solvant organique. Par « solvant » ou « solvant organique », on entend toute substance inerte, vis-à-vis des réactifs et des produits de réaction en phase liquide à sa température d'utilisation, dont la fonction est de diluer d'autres substances sans les modifier chimiquement et sans se modifier lui-même.
Il permet en outre de s'affranchir des agents de transfert de chaîne, bien connus de l'homme du métier, tels que mercaptans et halogénures d'alkyles.

Selon la présente invention, le polymère d'acide (méth)acrylique en solution obtenu par polymérisation, selon le procédé décrit ci-dessus, présente une masse moléculaire inférieure à 8 000 g/mol. Selon un mode de réalisation, il présente, en outre, un indice de polydispersibilité IP compris entre 2 et 3.

Les polymères sont généralement caractérisés par deux indices/grandeur/valeur :
- l'indice de polymolécularité IP (également appelé de manière équivalente polydispersité PD) ; et
- la masse moléculaire (également appelée de manière équivalente ou masse molaire ou poids moléculaire), exprimée en g/mol.

L'indice de polymolécularité correspond à la distribution des masses molaires des différentes macromolécules au sein du polymère d'acide (méth)acrylique. Si toutes les macromolécules présentent une même longueur (et donc une même masse moléculaire), cet indice est proche de 1. Si par contre, les macromolécules présentent des longueurs différentes (donc des masses moléculaires différentes), l'indice IP est supérieur à 1. Plus l'indice IP du polymère est proche de 1, plus celui-ci est efficace dans ses diverses applications.
Néanmoins, il peut s'avérer très coûteux d'obtenir un polymère d'acide (méth)acrylique présentant un indice IP proche de 1. Le procédé de la présente invention permet d'obtenir un polymère d'acide (méth)acrylique présentant un bon indice IP tout en maîtrisant les coûts associés au procédé.
Selon un mode de réalisation, cet indice IP est compris entre 2 et 3.

Selon l'étape c) du procédé objet de la présente invention, le réacteur de synthèse est chauffé à une température minimale de 60°C avant l'introduction des monomères à polymériser.
Selon un aspect de la présente invention, on chauffe le réacteur à une température d'au moins 80°C, par exemple à 95°C.
Une température d'au moins 60°C, par exemple de 85°C ou de 90°C, est maintenue tout au long de l'étape d) de polymérisation.
L'étape de polymérisation d) nécessite l'utilisation d'un système initiateur de polymérisation. Par « système initiateur de polymérisation » ou « système amorceur de polymérisation », on entend un système capable d'initier la polymérisation des monomères. Il s'agit classiquement d'un composé chimique ayant la capacité de générer des radicaux libres.

Selon un aspect de la présente invention, le système initiateur de polymérisation est choisi dans le groupe consistant en le peroxyde d'hydrogène, les persulfates de sodium, les persulfates de potassium, les persulfates d'ammonium, les hydroperoxydes et un mélange d'au moins deux de ces composés.

Selon un autre aspect de la présente invention, le système initiateur de polymérisation utilisée à l'étape d2) est le peroxyde d'hydrogène, également appelé eau oxygénée, H₂O₂.

Selon un aspect de la présente invention, l'étape a) du procédé consiste à introduire dans un réacteur de synthèse :
a1) de l'eau,
a2) du carbonate de cuivre CuCO₃, ou un de ses dérivés, et
a3) de l'acide (méth)acrylique ou de l'acide maléique, en excès molaire par rapport au composé a2).
Cette étape conduit à la préparation d'un (méth)acrylate de cuivre et/ou d'un maléate de cuivre dans le réacteur de synthèse.

Par « (méth)acrylate de cuivre », on entend un acrylate de cuivre et/ou un méthacrylate de cuivre.

L'acide (méth)acrylique ou de l'acide maléique se trouve en excès molaire par rapport au composé a2), de manière à ce que l'ensemble des atomes de cuivre du composé a2) soit sous forme ionisée dans le réacteur de synthèse.

Selon un autre aspect de l'invention, le pourcentage massique (poids/poids) entre le (méth)acrylate de cuivre ou le maléate de cuivre, obtenu(s) à l'épate a), et ledit(lesdits) monomère(s) (méth)acrylique(s) à polymériser, selon l'étape d), est compris entre 0,5 et 5 %, par exemple entre 1 et 4 %, ou entre 1,5 et 3 %.

Selon un autre aspect de l'invention, le pourcentage massique (poids/poids) entre le sel de fer, par exemple le sulfate de fer, ou un de ses dérivés hydratés, et ledit(lesdits) monomère(s) (méth)acrylique(s) à polymériser est compris entre 0,01 et 3 %, par exemple entre 0,03 et 1 %, ou entre 0,05 et 0,5 %.

Selon un autre aspect encore, le procédé de l'invention est tel que :
- les étapes a) et b) sont simultanées,
- on utilise le carbonate de cuivre CuCO₃, ou un de ses dérivés, pour préparer ledit (méth)acrylate de cuivre ou ledit maléate de cuivre,
- ledit sel de fer est un sulfate de fer ou un de ses dérivés hydratés.

La présente invention concerne également un procédé de préparation d'un polymère de l'acide (méth)acrylique en solution aqueuse, ledit polymère présentant une masse moléculaire inférieure à 8 000 g/mol, comprenant les étapes suivantes :
A) on introduit dans un réacteur de synthèse :
   A1) de l'eau,
   A2) du carbonate de cuivre CuCO₃, ou un de ses dérivés,
   A3) de l'acide (méth)acrylique ou de l'acide maléique, et
   A4) du sulfate de fer FeSO₄, ou un de ses dérivés hydratés,
B) on chauffe le réacteur à une température d'au moins 60°C,
C) on introduit dans le réacteur, de manière continue et simultanée, les composés suivants :
   C1) le ou les monomère(s) (méth)acrylique(s) à polymériser,
   C2) un système initiateur de polymérisation.

Selon un autre aspect de cet objet de la présente invention, le pourcentage massique (poids/poids) entre le carbonate de cuivre, ou un de ses dérivés, et ledit(lesdits) monomère(s) (méth)acrylique(s) à polymériser est compris entre 0,01 et 3 %, par exemple entre 0,03 et 1 %, ou entre 0,05 et 0,5 %.

Selon un autre aspect de la présente invention, le ratio massique entre le carbonate de cuivre, ou un de ses dérivés, et le sulfate de fer, ou un de ses dérivés hydratés, varie entre 1:4 et 10:1, par exemple entre 1:3 et 4:1.

Selon un aspect de la présente invention, le dit procédé est tel qu'il n'est ajouté dans le réacteur aucun composé de type agent de transfert de chaîne, par exemple aucun composé de formule (I) : 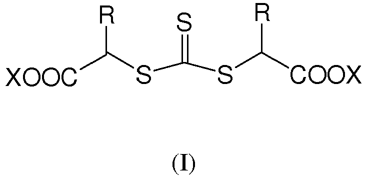 selon laquelle :
- X représente Na, K ou H, et
- R représente une chaîne alkyle comportant de 1 à 5 atomes de carbone.

Selon un autre aspect de la présente invention, le dit procédé est tel que notamment, il n'est pas ajouté dans le réacteur de dipropyl trithiocarbonate (DPTTC, CAS No. 6332-91-8) ou ses sels, par exemple son sel disodique (trithiocarbonate de dipropionate de sodium, CAS No. 86470-33-2, Mw = 298,31 g/mol), tel que représenté par la formule (IV) ci-dessous :

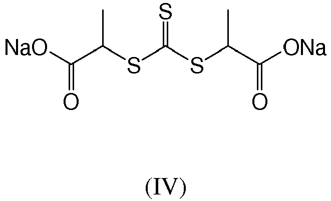

Selon un aspect de la présente invention encore, les conditions réactionnelles sont telles que le taux de conversion des monomères à polymériser est supérieur à 99 %.

La quantité de monomères résiduels (acide acrylique ou acide méthacrylique) peut être évaluée par chromatographie liquide à haute pression (CHLP). Dans cette méthode, les composants constitutifs du mélange sont séparés sur une phase stationnaire, et détectés par un détecteur UV. Après étalonnage du détecteur, on peut à partir de l'aire du pic correspondant au composé acrylique obtenir la quantité d'acide (méth)acrylique résiduel.

Cette méthode est notamment décrite dans le manuel « Chimie Organique Expérimentale », par M. Chavanne, A. Julien, G. J. Beaudoin, E. Flamand, deuxième Edition, Editions Modulo, chapitre 18, pages 271-325.

Selon un autre aspect de la présente invention, les conditions réactionnelles sont telles que le taux de conversion des monomères à polymériser est supérieur à 99,5 %. Dans ce cas, la quantité de monomères résiduels est inférieure à 0,5 % ou inférieure à 5 000 ppm.

Selon un autre aspect de la présente invention, les conditions réactionnelles sont telles que le taux de conversion des monomères à polymériser est supérieur à 99,7 %. Dans ce cas, la quantité de monomères résiduels est inférieure à 0,3 % ou inférieure à 3 000 ppm.

Selon un autre aspect de l'invention, le procédé ne comporte aucune étape d'élimination des sous-produits de réaction après l'étape d) de polymérisation.

### Utilisations :

Un autre objet de la présente invention concerne l'utilisation du carbonate de cuivre CuCO₃, ou d'un de ses dérivés, pour préparer un polymère de l'acide (méth)acrylique en solution, ledit polymère présentant une masse moléculaire inférieure à 8 000 g/mol.

La présente invention concerne également l'utilisation combinée de carbonate de cuivre CuCO₃, ou d'un de ses dérivés, et de sulfate de fer FeSO₄, ou d'un de ses dérivés, pour préparer un polymère de l'acide (méth)acrylique en solution, ledit polymère présentant une masse moléculaire inférieure à 8 000 g/mol.

Selon un mode de réalisation de ces utilisations, le pourcentage massique (poids/poids) entre le carbonate de cuivre, ou un de ses dérivés, et le(les) monomère(s) (méth)acrylique(s) à polymériser, est compris entre 0,01 et 3 %, par exemple entre 0,03 et 1 %, ou entre 0,05 et 0,5 %.

Selon un mode de réalisation de ces utilisations, le pourcentage massique (poids/poids) entre le sulfate de fer, ou un de ses dérivés hydratés, et ledit(lesdits) monomère(s) (méth)acrylique(s) est compris entre 0,01 et 3 %, par exemple entre 0,03 et 1 %, ou entre 0,05 et 0,5 %.

Selon un mode de réalisation de ces utilisations, le ratio massique entre le carbonate de cuivre, ou un de ses dérivés, et le sulfate de fer, ou un de ses dérivés hydratés, varie entre 1:4 et 10:1, par exemple entre 1:3 et 4:1.

La présente invention concerne également l'utilisation d'un (méth)acrylate de cuivre ou un maléate de cuivre pour préparer un polymère d'acide (méth)acrylique en solution aqueuse, ledit polymère présentant une masse moléculaire inférieure à 8 000 g/mol des monomères. Ledit polymère présente par ailleurs toutes les caractéristiques présentées précédemment.

### EXEMPLES :

Dans chacun des exemples suivants, la masse moléculaire des polymères selon l'invention est déterminée par chromatographie d'exclusion stérique (CES) ou en anglais « Gel Permeation Chromatography » (GPC).

Une telle technique met en oeuvre un appareil de chromatographie liquide de marque WATERS™ doté d'un détecteur. Ce détecteur est un détecteur de concentration réfractométrique de marque WATERS™.

Cet appareillage de chromatographie liquide est doté d'une colonne d'exclusion stérique convenablement choisie par l'homme du métier afin de séparer les différents poids moléculaires des polymères étudiés.
La phase liquide d'élution est une phase aqueuse ajustée à pH 9,00 par de la soude 1N contenant 0,05M de NaHCO₃, 0,1M de NaNO₃, 0,02M de triétanolamine et 0,03 % de NaN3.
De manière détaillée, selon une première étape, on dilue à 0,9 % sec la solution de polymérisation dans le solvant de solubilisation de la CES, qui correspond à la phase liquide d'élution de la CES à laquelle est ajoutée 0,04 % de diméthylformamide qui joue le rôle de marqueur de débit ou étalon interne. Puis on filtre à 0,2 µm. 100 µL sont ensuite injectés dans l'appareil de chromatographie (éluant : une phase aqueuse ajustée à pH 9,00 par de la soude 1N contenant 0,05 M de NaHCO₃, 0,1M de NaNO₃, 0,02 M de triétanolamine et 0,03 % de NaN₃).
L'appareil de chromatographie liquide contient une pompe isocratique (WATERS™ 515) dont le débit est réglé à 0,8 ml/min. L'appareil de chromatographie comprend également un four qui lui-même comprend en série le système de colonnes suivant : une précolonne de type GUARD COLUMN ULTRAHYDROGEL WATERS™ de 6 cm de long et 40 mm de diamètre intérieur, et une colonne linéaire de type ULTRAHYDROGEL WATERS™ de 30 cm de long et 7,8 mm de diamètre intérieur. Le système de détection quant à lui se compose d'un détecteur réfractométrique de type RI WATERS™ 410. Le four est porté à la température de 60°C, et le réfractomètre est porté à la température de 45°C.
L'appareil de chromatographie est étalonné par des étalons de polyacrylate de sodium en poudre de différentes masses moléculaires certifiées pour le fournisseur: POLYMER STANDARD SERVICE ou AMERICAN POLYMER STANDARDS CORPORATION.

L'indice de polydispersibilité IP du polymère est le rapport de la masse moléculaire moyenne en masse Mw sur la masse moléculaire en nombre Mn.

La quantité de monomères résiduels est mesurée selon des techniques classiques, connues de l'homme du métier, par exemple par chromatographie liquide à haute pression (CHLP).

### Exemple 1 :

Cet exemple a pour objet d'illustrer la préparation de polymères d'acide (méth)acrylique selon l'invention, par l'utilisation de :
- un sel de dipropionate trithiocarbonate (DPTTC) ou
- d'hypophosphite de sodium,
- de sulfate de fer heptahydraté, FeSO₄.7H₂O et/ou de carbonate de cuivre sous forme CuCO₃.Cu(OH)₂.

### Essai 1 - Art antérieur :

Cet essai illustre un procédé de préparation d'un polymère au moyen d'une polymérisation radicalaire contrôlée de type RAFT.

On charge dans le réacteur de synthèse en verre muni d'une agitation mécanique et d'un chauffage de type bain d'huile 328 g d'eau, 94 g d'agent de transfert de chaîne DPTTC 29 % (soit 27 g de DPTTC 100 % ou 0,092 mole).

On chauffe jusqu'à atteindre une température de 95°C.

On coule, en 2 heures de temps, 328 g d'acide acrylique 100 % (soit 4,558 moles) et en parallèle :
- 4 g de persulfate de sodium Na₂S₂O₈ (soit 0,017 mole) dissous dans 76 g d'eau, et
- 1,15 g de métabisulfate de sodium Na₂S₂O₅ (soit 0,006 mole) dissous dans 76 g d'eau.

On maintient ensuite la température pendant 2h, puis on injecte 3,2 g de peroxyde d'hydrogène 130V diluée dans 46 g d'eau.

On neutralise ensuite sous agitation avec 381 g de soude 50 % diluée dans 48 g d'eau.

On cuit à nouveau 1 heure à 95°C puis on laisse refroidir à température ambiante.

### Essai 2 - Hors invention :

Selon cet essai, on reproduit les conditions de l'essai 1 en diminuant d'un facteur 10 la quantité d'agent de transfert de chaîne DPTTC utilisé.

On charge dans le réacteur de synthèse en verre muni d'une agitation mécanique et d'un chauffage de type bain d'huile 328 g d'eau, 19 g d'agent de transfert de chaîne DPTTC 14 % (soit 2,7 g de DPTTC 100 % ou 0,0092 mole).

On chauffe jusqu'à atteindre une température de 95°C.

On coule, en 2 heures de temps, 328 g d'acide acrylique 100 % (soit 4,558 moles) et en parallèle :
- 4 g de persulfate de sodium Na₂S₂O₈ (soit 0,017 mole) dissous dans 76 g d'eau, et
- 1,15 g de métabisulfite de sodium Na₂S₂O₅ (soit 0,006 mole) dissous dans 76 g d'eau. On maintient ensuite la température pendant 2h, puis on injecte 3,2 g de peroxyde d'hydrogène 130V dilué dans 46 g d'eau.

On neutralise ensuite sous agitation avec 381 g de soude 50 % diluée dans 48 g d'eau.

On cuit à nouveau 1 heure à 95°C puis on laisse refroidir à température ambiante.

### Essai 3 - Art antérieur :

Cet essai correspond à l'essai 2 de l'exemple 2 du document WO 2005/095466 (Coatex).

On charge dans le réacteur de synthèse muni d'une agitation mécanique et d'un chauffage de type bain d'huile 150 g d'eau, 20,31 g d'agent de transfert de chaîne DPTTC 14,4 % (soit 2,92 g de DPTTC 100 %), ainsi que 50 g d'acide acrylique 100 %.

On ajoute ensuite la source de radicaux libres, en l'espèce 0,4 g de V501. On chauffe jusqu'à atteindre une température de 95°C. On maintient ensuite la température pendant 2h, puis on laisse refroidir à température ambiante.

On neutralise alors avec 55 g de soude à 50 %.

### Essai 4 - Art antérieur :

Cet essai illustre un procédé de préparation d'un polymère exclusivement à l'hypophosphite de sodium monohydraté.

On charge dans un réacteur de synthèse muni d'une agitation mécanique et d'un chauffage de type bain d'huile 209 g d'eau. On ajoute 0,1 g de sulfate de fer heptahydraté et 0,015 g de sulfate de cuivre pentahydraté.

On chauffe le milieu à 90°C puis on ajoute de manière simultanée et continue, en 2h de temps :
- 305 g d'acide acrylique et 13 g d'eau,
- 19,6 g de H₂O₂ à 35 % et
- 25,6 g de NaPO₂H₂,H₂O dissous dans 32 g d'eau.

On cuit 1h30 à 90°C.

On neutralise avec de la soude 50 % jusqu'à obtenir un pH = 8.

### Essai 5 - Invention :

On charge dans un réacteur de synthèse muni d'une agitation mécanique et d'un chauffage de type bain d'huile 245 g d'eau, 0,28 g de carbonate de cuivre sous forme CuCO₃.Cu(OH)₂, 5 g d'acide acrylique et 0,27 g de sulfate de fer heptahydraté.

On chauffe le milieu à 94°C puis on ajoute de manière simultanée et continue, en 2 heures de temps :
- 35,3 g de H₂O₂ à 35 % diluée dans 9,4 g d'eau et
- 274,9 g d'acide acrylique.

On cuit 1h30 à 94°C.

On neutralise avec de la soude 50 %.

### Essai 6 - Invention :

On charge dans un réacteur de synthèse muni d'une agitation mécanique et d'un chauffage de type bain d'huile 245 g d'eau, 0,28 g de carbonate de cuivre sous forme CuCO₃.Cu(OH)₂, 5 g d'acide méthacrylique et 0,31 g de sulfate de fer heptahydraté.

On chauffe le milieu à 94°C puis on ajoute de manière simultanée et continue, en 2 heures de temps :
- 35,3 g de H₂O₂ à 35 % diluée dans 9,4 g d'eau et
- 274,9 g d'acide acrylique.

On cuit 1h30 à 94°C.

On neutralise avec de la soude 50 %.

### Essai 7 - Invention :

Idem essai 5 avec 0,345 g de sulfate de fer heptahydraté.

### Essai 8 - Invention :

Idem essai 5 avec 0,2415 g de sulfate de fer heptahydraté.

### Essai 9 - Invention :

Idem essai 5 avec 0,414 g de sulfate de fer heptahydraté.

### Essai 10 - Invention :

Idem essai 5 avec 0,552 g de sulfate de fer heptahydraté.

### Essai 11 - Hors invention :

On charge dans un réacteur de synthèse muni d'une agitation mécanique et d'un chauffage de type bain d'huile 245 g d'eau, 0,28 g de carbonate de cuivre sous forme CuCO₃.Cu(OH)₂ et 10 g d'acide acrylique.

On chauffe le milieu à 94°C puis on ajoute de manière simultanée et continue, en 2 heures de temps :
- 35,3 g de H₂O₂ à 35 % diluée dans 9,4 g d'eau et
- 269,9 g d'acide acrylique.

On cuit 1h30 à 94°C.

On neutralise avec de la soude 50 %.

### Essai 12 - Invention :

On charge dans un réacteur de synthèse muni d'une agitation mécanique et d'un chauffage de type bain d'huile 245 g d'eau, 0,34 g de carbonate de cuivre sous forme CuCO₃.Cu(OH)₂, 10 g d'acide acrylique et 0,27 g de sulfate de fer heptahydraté.

On chauffe le milieu à 94°C puis on ajoute de manière simultanée et continue, en 2 heures de temps :
- 35,3 g de H₂O₂ à 35 % diluée dans 9,4 g d'eau et
- 269,9 g d'acide acrylique.

On cuit 1h30 à 94°C.

On neutralise avec de la soude 50 %.

### Essai 13 - Invention :

Idem essai 12 avec 0,229 g de CuCO₃.Cu(OH)₂.

### Essai 14 - Hors invention :

On charge dans un réacteur de synthèse muni d'une agitation mécanique et d'un chauffage de type bain d'huile 245 g d'eau, 0,3 g de carbonate de fer FeCO₃, 10 g d'acide acrylique et 0,27 g de sulfate de fer heptahydraté.

On chauffe le milieu à 94°C puis on ajoute de manière simultanée et continue, en 2 heures de temps :
- 35,3 g de H₂O₂ à 35 % diluée dans 9,4 g d'eau et
- 269,9 g d'acide acrylique.
On cuit 1h30 à 94°C.
On neutralise avec de la soude 50 %.

Les résultats des mesures réalisées sur les polymères des essais ci-dessus sont regroupés dans les tableaux 1 à 3 qui suivent.

**Tableau 1**

| **Essai n°** | | **% massique DPTTC / monomères** | **% massique NaPO₂H₂ / monomères** | **Mw (g/mol)** | **IP** | **ES (%)** | **pH** | **AA résiduels (%)** |
|---|---|---|---|---|---|---|---|---|
| 1 | AANT | 8,23 | *na* | 5 065 | 1,5 | 36,6 | 9 | 0,13 |
| 2 | HINV | 0,82 | *na* | **43 400** | 3,5 | 36,6 | 8,5 | 0,03 |
| 3 | AANT | 5,8 | *na* | 4 947 | 1,55 | 36,6 | 9 | 0,5 |
| 4 | AANT | *na* | 7,0 | 4 780 | 2,3 | 40,0 | 8,0 | 0,02 |

| | | | | | | | | |
|---|---|---|---|---|---|---|---|---|
| *na* : non applicable AANT : art antérieur HINV : hors invention | | | | | | | | |

**Tableau 2**

| **Essai n°** | | **% massique CuCO₃.Cu(OH)₂ / monomères** | **% massique FeSO₄.7H₂O / monomères** | **Ratio CuCO₃.Cu(OH)₂ / FeSO₄.7H₂O** | **Mw (g/mol)** | **IP** |
|---|---|---|---|---|---|---|
| 5 | INV | 0,1 | 0,1 | 1,04 | 5 770 | 2,5 |
| 6 | INV | 0,1 | 0,11 | 0,91 | 7 030 | 2,7 |
| 7 | INV | 0,1 | 0,12 | 0,83 | 5 575 | 2,5 |
| 8 | INV | 0,1 | 0,09 | 1,18 | 7 020 | 2,7 |
| 9 | INV | 0,1 | 0,15 | 0,69 | 6 075 | 2,6 |
| 10 | INV | 0,1 | 0,20 | 0,52 | 5 730 | 2,5 |
| 11 | HINV | 0,1 | 0 | *na* | **11 105** | 3,1 |

| | | | | | | |
|---|---|---|---|---|---|---|
| *na* : non applicable INV : invention HINV : hors invention | | | | | | |

**Tableau 3**

| **Essai n°** | | **% massique CuCO₃.Cu(OH)₂ / monomères** | **% massique FeSO₄.7H₂O / monomères** | **Ratio CuCO₃.Cu(OH)₂ / FeSO₄.7H₂O** | **Mw (g/mol)** | **IP** |
|---|---|---|---|---|---|---|
| 12 | INV | 1,12 | 0,1 | 1,24 | 7 165 | 2,5 |
| 13 | INV | 0,08 | 0,1 | 0,83 | 7 310 | 2,5 |
| 14 | HINV | 0 + *0,1 % FeCO₃* | 0,1 | *na* | **30 440** | 5,7 |

| | | | | | | |
|---|---|---|---|---|---|---|
| *na* : non applicable INV : invention HINV : hors invention | | | | | | |

Pour l'ensemble des essais selon l'invention, on note que le taux de conversion des monomères à polymériser est supérieur à 99,7 % et que le taux de monomères résiduels est largement inférieur à 3 000 ppm par rapport au polymère sec.

### Exemple 2 :

Cet exemple a pour objet d'illustrer les teneurs en sulfure de carbone, en sulfure d'hydrogène et en ions phosphate de différents échantillons mettant en oeuvre des solutions de polymères de l'art antérieur ou des solutions de polymères selon la présente invention.

Les analyses des différents échantillons sont réalisées à l'aide d'une chromatographie gazeuse Agilent G1530 couplée à un spectromètre de masse Agilent G2577A comme détecteur. L'injection est réalisée grâce à un espace de tête Agilent G1888. On utilise une colonne Agilent HP5 30 m x 0,25 mm x 1 µm (phase 5 % phényl et 95 % méthylsiloxane) qui permet l'élution des analyses.
L'analyse est réalisée à partir de 2 grammes en l'état des échantillons. La quantification est réalisée par la méthode des ajouts dosés.

Les analyses des différents échantillons sont également réalisées à l'aide d'une chromatographie ionique Metrohm 761 Compact IC équipée d'un détecteur conductimétrique, d'un suppresseur chimique et d'un suppresseur de CO₂. On utilise une colonne échangeuse d'anions Metrohm Asupp5 250 et deux pré-colonnes (Metrohm Asupp5 et RP) afin d'éluer les anions dont l'HPO₄²⁻.

L'analyse est réalisée à partir de 0,1 g d'échantillon dilué dans 60 g d'eau distillée.
La quantification est réalisée à l'aide d'un étalonnage externe.

On réalise 3 synthèses :
- un acide polyacrylique préparé au moyen d'un procédé de polymérisation radicalaire contrôlée de type RAFT, selon l'essai 1 de l'exemple 1 ci-dessus,
- un acide polyacrylique préparé au moyen d'un procédé de polymérisation selon l'essai 4 de l'exemple 1 ci-dessus,
- une solution de polymère de l'acide polyacrylique préparée au moyen d'un procédé selon la présente invention, selon l'essai 5 de l'exemple 1 ci-dessus.

On obtient respectivement les échantillons 1, 2 et 3. L'ensemble des trois échantillons est ramené à un extrait sec de 36 % en poids.

Les résultats d'analyses sur ces échantillons sont consignés dans le tableau 4 ci-dessous.

**Tableau 4**

| Echantillons | INVention Art ANTérieur | Teneur en HPO₄²⁻ (ppm) | Teneur en SO₄²⁻ (ppm) | Teneur en H₂S (ppm) | Teneur en CS₂ (ppm) |
|---|---|---|---|---|---|
| 1 | AANT- RAFT | *nd* | 7 758 | 200 | *1 000* |
| 2 | AANT - hypo | 5 032 | 128 | *nd* | *nd* |
| 3 | INV | < 50 | 257 | *nd* | *nd* |

| | | | | | |
|---|---|---|---|---|---|
| *nd* : non détectable | | | | | |

L'analyse de l'échantillon 1, c'est-à-dire un acide polyacrylique obtenu au moyen d'un procédé RAFT, indique des teneurs importantes en sous-produits soufrés SO₄²⁻, H₂S et CS₂, ce qui constitue un inconvénient majeur du fait de leur toxicité.

L'analyse de l'échantillon 2, c'est-à-dire un acide polyacrylique préparé au moyen d'un procédé de l'art antérieur à forte teneur en NaPO₂H₂, indique une forte teneur en ions HPO₄²⁻ résiduels (5 032 ppm).

L'analyse de l'échantillon 3, à savoir une solution de polymère de l'acide polyacrylique préparée au moyen d'un procédé selon la présente invention, montre que les teneurs en H₂S et CS₂ sont non détectables. La teneur en ions phosphate est nettement inférieure à celle de l'échantillon 2.

Le polymère obtenu au moyen du procédé de l'invention offre un bon compromis en terme de pureté par rapport aux polymères obtenus avec des procédés RAFT ou à l'hypophosphite de sodium.

## Revendications

1. Procédé de préparation d'un polymère de l'acide (méth)acrylique en solution aqueuse, ledit polymère présentant une masse moléculaire inférieure à 8 000 g/mol, déterminée par chromatographie d'exclusion sphérique comme décrit dans la description, comprenant les étapes suivantes :
a) on prépare un (méth)acrylate de cuivre ou un maléate de cuivre dans un réacteur de synthèse,
b) on introduit dans le réacteur un sel de fer, par exemple du sulfate de fer, ou un de ses dérivés hydratés,
c) on chauffe le réacteur à une température d'au moins 60°C,
d) on introduit dans le réacteur, de manière continue et simultanée, les composés suivants :
d1) le ou les monomère(s) (méth)acrylique(s) à polymériser,
d2) un système initiateur de polymérisation, par exemple du peroxyde d'hydrogène.

2. Procédé selon la revendication 1, selon lequel l'étape a) consiste à introduire dans un réacteur de synthèse :
a1) de l'eau,
a2) du carbonate de cuivre CuCO₃, ou un de ses dérivés, et
a3) de l'acide (méth)acrylique ou de l'acide maléique.

3. Procédé selon la revendication 1, selon lequel le pourcentage massique (poids/poids) entre le (méth)acrylate de cuivre ou le maléate de cuivre et ledit(lesdits) monomère(s) (méth)acrylique(s) à polymériser est compris entre 0,5 et 5 %.

4. Procédé selon l'une quelconque des revendications précédentes, selon lequel le pourcentage massique (poids/poids) entre le sel de fer, par exemple le sulfate de fer, ou un de ses dérivés hydratés, et ledit(lesdits) monomère(s) (méth)acrylique(s) à polymériser est compris entre 0,01 et 3 %.

5. Procédé selon l'une quelconque des revendications précédentes, selon lequel :
- les étapes a) et b) sont simultanées,
- on utilise le carbonate de cuivre CuCO₃, ou un de ses dérivés, pour préparer ledit (méth)acrylate de cuivre ou ledit maléate de cuivre,
- ledit sel de fer est un sulfate de fer ou un de ses dérivés hydratés.

6. Procédé selon la revendication 5, selon lequel le ratio massique entre le carbonate de cuivre, ou un de ses dérivés, et ledit sulfate de fer, ou un de ses dérivés hydratés, varie entre 1:4 et 10:1.

7. Procédé selon l'une quelconque des revendications précédentes, selon lequel il n'est ajouté dans le réacteur aucun composé de type agent de transfert de chaîne, par exemple aucun composé de formule (I) : 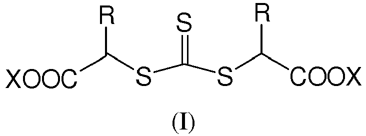 selon laquelle :
- X représente Na, K ou H, et
- R représente une chaîne alkyle comportant de 1 à 5 atomes de carbone.

8. Procédé selon l'une quelconque des revendications précédentes, selon lequel ledit procédé ne comporte aucune étape d'élimination des sous-produits de réaction après l'étape d) de polymérisation.

9. Procédé selon l'une quelconque des revendications précédentes, selon lequel les conditions réactionnelles sont telles que le taux de conversion des monomères à polymériser est supérieur à 99 %.

10. Utilisation du carbonate de cuivre CuCO₃, ou d'un de ses dérivés, et d'un sel de fer pour préparer un polymère de l'acide (méth)acrylique en solution, ledit polymère présentant une masse moléculaire inférieure à 8 000 g/mol, déterminée par chromatographie d'exclusion sphérique comme décrit dans la description.

## Patentansprüche

1. Verfahren zur Herstellung eines (Meth)acrylsäurepolymers in wässriger Lösung, wobei das Polymer eine Molekularmasse von weniger als 8.000 g/mol aufweist, die mittels sterischer Ausschlusschromatographie, wie in der Beschreibung beschrieben, bestimmt wird, umfassend die folgenden Schritte:
a) Herstellen eines Kupfer(meth)acrylats oder eines Kupfermaleats in einem Synthesereaktor,
b) Einführen in den Reaktor eines Eisensalzes, zum Beispiel Eisensulfat, oder eines seiner hydratisierten Derivate,
c) Erhitzen des Reaktors auf eine Temperatur von mindestens 60°C,
d) kontinuierliches und gleichzeitiges Einführen in den Reaktor der folgenden Verbindungen:
d1) das oder die zu polymerisierenden (Meth)acrylsäuremonomere,
d2) ein Polymerisationsinitiatorsystem, zum Beispiel Wasserstoffperoxid.

2. Verfahren nach Anspruch 1, wobei Schritt a) darin besteht, in einen Synthesereaktor Folgendes einzuführen:
a1) Wasser,
a2) Kupfercarbonat CuCO₃ oder eines seiner Derivate, und
a3) (Meth)acrylsäure oder Maleinsäure.

3. Verfahren nach Anspruch 1, wobei der Gewichtsprozentanteil (Gewicht/Gewicht) zwischen Kupfer(meth)acrylat oder Kupfermaleat und dem bzw. den zu polymerisierenden (Meth)acrylsäuremonomeren im Bereich zwischen 0,5 und 5 % liegt.

4. Verfahren nach einem der vorhergehenden Ansprüche, wobei der Masseprozentanteil (Gewicht/Gewicht) zwischen dem Eisensalz, zum Beispiel Eisensulfat, oder einem seiner hydratisierten Derivate und dem bzw. den zu polymerisierenden (Meth)acrylsäuremonomeren im Bereich zwischen 0,01 und 3 % liegt.

5. Verfahren nach einem der vorhergehenden Ansprüche, wobei:
- die Schritte a) und b) gleichzeitig sind,
- das Kupfercarbonat CuCO₃ oder eines seiner Derivate verwendet wird, um das Kupfer(meth)acrylat oder das Kupfermaleat herzustellen,
- wobei das Eisensalz ein Eisensulfat oder eines seiner hydratisierten Derivate ist.

6. Verfahren nach Anspruch 5, wobei das Gewichtsverhältnis zwischen dem Kupfercarbonat oder einem seiner Derivate und dem Eisensulfat oder einem seiner hydratisierten Derivate zwischen 1:4 und 10:1 variiert.

7. Verfahren nach einem der vorhergehenden Ansprüche, wobei in den Reaktor keine Verbindung vom Typ Kettenübertragungsmittel gegeben wird, zum Beispiel keine Verbindung der Formel (I): 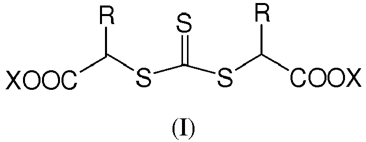 worin:
- X für Na, K oder H steht, und
- R für eine Alkylkette steht, umfassend 1 bis 5 Kohlenstoffatome.

8. Verfahren nach einem der vorhergehenden Ansprüche, wobei das Verfahren keinen Schritt zum Entfernen der Reaktionsnebenprodukte nach Schritt d) zur Polymerisation umfasst.

9. Verfahren nach einem der vorhergehenden Ansprüche, wobei die Reaktionsbedingungen derart sind, dass der Umwandlungsgrad der zu polymerisierenden Monomere mehr als 99 % beträgt.

10. Verwendung von Kupfercarbonat CuCO₃ oder einem seiner Derivate und eines Eisensalzes, um ein (Meth)acrylsäurepolymer in Lösung herzustellen, wobei das Polymer eine Molekularmasse von weniger als 8.000 g/mol aufweist, die mittels sterischer Ausschlusschromatographie, wie in der Beschreibung beschrieben, bestimmt wird.

## Claims

1. Method for preparing a (meth)acrylic acid polymer in aqueous solution, said polymer having a molecular mass lower than 8.000 g/mol, determined by size exclusion chromatography as described in the description, comprising the following steps:
a) a copper (meth)acrylate or a copper maleate is prepared in a synthesis reactor,
b) an iron salt, for example iron sulfate, or one of its hydrated derivatives, is introduced into the reactor,
c) the reactor is heated to a temperature of at least 60°C,
d) the following compounds are introduced into the reactor, continuously and simultaneously:
d1) the (meth)acrylic monomer(s) to be polymerized,
d2) a polymerization initiator system, for example hydrogen peroxide.

2. Method according to claim 1, wherein the step a) consists in introducing into a synthesis reactor:
a1) water,
a2) copper carbonate CuCO₃, or one of its derivatives, and
a3) (meth)acrylic acid or maleic acid.

3. Method according to claim 1, wherein the mass percentage (weight/weight) between the copper (meth)acrylate or copper maleate and said (meth)acrylic monomer(s) to be polymerized is between 0.5% and 5%.

4. Method according to any one of the previous claims, wherein the mass percentage (weight/weight) between the iron salt, for example iron sulfate, or one of its hydrated derivatives, and said (meth)acrylic monomer(s) to be polymerized is between 0.01% and 3%.

5. Method according to any one of the previous claims, wherein:
- steps a) and b) are simultaneous,
- copper carbonate CuCO₃, or one of its derivatives, is used to prepare said copper (meth)acrylate or said copper maleate,
- said iron salt is an iron sulfate or one of its hydrated derivatives

6. Method according to claim 5, wherein the mass ratio between the copper carbonate, or one of its derivatives, and said iron sulfate, or one of its hydrated derivatives, ranges between 1:4 and 10:1.

7. Method according to any one of the previous claims, wherein no compound of chain-transfer agent type is added to the reactor, for example no compound of formula (I): 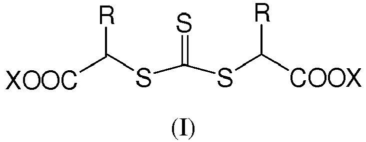 according to which:
- X represents Na, K or H, and
- R represents an alkyl chain comprising from 1 to 5 carbon atoms.

8. Method according to any one of the previous claims, wherein said process does not comprise any step of removing the reaction by-products after the polymerization step d).

9. Method according to any one of the previous claims, wherein the reaction conditions are such that the conversion rate of the monomers to be polymerized is greater than 99%.

10. Use of copper carbonate CuCO₃, or one of its derivatives, and of an iron salt for preparing a (meth)acrylic acid polymer in solution, said polymer having a molecular mass of less than 8.000 g/mol, determined by size exclusion chromatography as described in the description.
